# EUROPEAN PATENT APPLICATION

(11) **EP 4 516 493 A1**
(43) Date of publication of application: **05.03.2025**
(21) Application number: 23194272.3
(22) Date of filing: 30.08.2023
(51) Int. Cl.: B29C 70/54, B29C 33/68, B29D 99/00, B29C 37/00, F03D 1/06, B29L 31/08

(54) **METHOD FOR REMOVING A FOIL OR TAPE FROM AN INNER SURFACE OF A MOLD AND APPARATUS**

(71) Applicant: Siemens Gamesa Renewable Energy A/S, 7330 Brande (DK)
(72) Inventor: Harboe, Niels, 9560 Hadsund (DK)
(74) Representative: SGRE-Association

(57) **Abstract**

A method for removing a foil (17) or tape (46) from an inner surface (14) of a mold (7) for casting a wind turbine blade (3) or a part thereof, the foil (17) or tape (46) comprising a non-stick material (18) on the inside which is configured not to react with resin during casting (S1, S2, S3), and an adhesive material (19) on the outside to stick to the inner surface (14) of the mold (7), the method comprising:
a) locally heating (S5) the foil (17) or tape (46) to soften the adhesive material (19); and
b) exerting (S6) a pulling force on the foil (17) or tape (46) to remove the foil (17) or tape (46) from the inner surface (14) of the mold (7).

By way of locally heating the foil or tape, it is no more required to rely on the remaining heat of the mold after removal of the cast wind turbine blade. This has ergonomic advantages and makes the process more flexible.

## Description

The present invention relates to a method for removing a foil or tape from an inner surface of a mold and to an apparatus.

One way to produce more power using a wind turbine under given wind conditions is to increase the size of the blades. However, the manufacture of wind turbine blades is becoming increasingly difficult for increasing blade sizes.

Currently, many wind turbine blades are made by premanufacturing parts of the blade separately, such as a pressure-side shell and a suction-side shell, and gluing the parts to each other. The parts are, for example, premanufactured inside a mold by infusing a fiber lay-up with a resin and curing the resin.

In another method, disclosed in EP 1 310 351 A1, the blade is manufactured by packing a fiber lay-up for the entire blade, or for a lengthwise blade section, on a mandrel (mold core) and by infusing resin in a vacuum-assisted manner, and curing the resin inside a mold.

Hence, when producing large composite structures, such as blades or parts thereof, there is a need for a large mold. Such molds are typically themselves made of fiber composite materials. The reason is that this gives a lot of freedom with regard to the shape of the mold surface. Further, such molds are lightweight.

However, the mold surface must be protected to ensure that a molded part, which is also made of a fiber composite material, can be demolded from the mold. To this end, the mold surface is covered according to one approach known in the art, with a self-adhesive PTFE (polytetrafluorethylene)-foil. The adhesive material used in such foils is often silicone-based in order to withstand high temperatures during the curing phase.

Worn out or otherwise damaged foils need to be replaced. It is known to pull off or tear off worn-out foils from the mold surface. If this pulling or tearing off is not done at elevated temperatures, the pulling force is high, with the silicone-based adhesive clinging to the mold surface. This may induce damages to the mold surface, in particular, if filler material, paint or even fibers are torn out of the mold surface along with the foil.

It is thus common practice to remove the worn-out foil while the mold is still hot after the demolding of the part. In particular, if the resin used in the molding of the part has a polymer matrix with an exothermic crosslinking, one can still benefit from the resulting heat. The heat keeps the adhesive of the foil soft, which may therefore be removed more easily.

However, working in a hot-mold shell is a very challenging working environment to human operators. Depending on the size of the blade, the operator may be able to stand fully within the mold shell. The mold shell, right after demolding, typically has a temperature between 60 and 80 degrees Celsius. This puts significant heat loads on the human operator. This is especially the case, when the human operator needs to exert substantial forces to pull off the foil from the mold surface.

Also, the heat remaining in the mold may not always suffice, so the worn foil needs to be cut into narrow strips to enable the pulling or tearing off of the foil as the pulling force may otherwise become too high for a human operator. Also, when the adhesive has cooled down too much, spatulas may be necessary to scrape off the adhesive remaining stuck to the mold surface of the removal of the foil. This scraping off may introduce scratches and marks on the delicate mold surface.

It is thus one object of the present invention to provide an improved approach towards removing a foil or tape from an inner surface of a mold.

According to a first aspect, there is provided a method for removing a foil or tape from an inner surface of a mold for casting a wind turbine blade or a part thereof, the foil or tape comprising a non-stick material on the inside which is configured not to react with resin during casting, and an adhesive material on the outside to stick to the inner surface of the mold, the method comprising:
a) locally heating the foil or tape to soften the adhesive material; and
b) exerting a pulling force on the foil or tape to remove the foil or tape from the inner surface of the mold.

Applying the present method, the adhesive material may be locally heated to remove the foil or tape. Therefore, one does not need to rely on the remaining heat after casting the wind turbine blade or a part thereof to ensure sufficient softness of the adhesive material. Thus, the removal of the foil or tape may be done after the mold has sufficiently cooled down to allow for an ergonomic working environment. Another advantage of the present method is that it provides more flexibility with regard to the processes around the mold. Removal of the foil or tape may thus be postponed to a point in time which allows for a more efficient use of the mold.

The non-stick material may be PTFE, for example. The non-stick material may be integrated with a fiber mesh, for example a glass fiber mesh. This makes the foil or tape more sturdy. The adhesive material may include or consist of silicone, for example.

When the foil or tape is brought to the production site, the adhesive material may be covered with a backing layer, such as paper, for example. The backing layer is removed, and the foil or tape is stuck to the inner mold surface by way of the adhesive material.

The non-stick material is facing towards the inside of the mold. A fiber lay-up comprising, for example, glass fibers, carbon fibers and/or aramid fibers and/or a resin, in particular an epoxy resin, does not stick to the non-stick material. This is even the case when heat and pressure is applied to the fiber material and/or the resin. The resin may be of a kind that exothermically crosslinks.

"Inside" and "outside" presently refer, unless indicated otherwise, to a center of the mold, wherein "outside" refers to a direction facing away from the center of the mold, and "inside" refers to a direction facing towards the center of the mold.

A "foil" as used herein is a thin layer of material which is used to cover large portions of the mold surface. The thickness of the foil may be smaller than 2 mm, preferably smaller than 1 mm, preferably around .8 mm.

A "tape" as used herein is typically used to repair portions of foils that have been previously placed. Another use of a tape is to cover the mold surface in the area of the mold flanges. Another use of the tape is to cover butt joints between different layers of foil. A tape has typically a much smaller breadth than length. A tape may, in some embodiments, be configured without an embedded fiber mesh, and thus consists only of the non-stick material and the adhesive material.

The foil and the tape may be supplied at the production site in rolls. Foil or tape is then cut off from the rolls to provide the desired length of material.

"Casting" herein refers to infusing a fiber lay-up in the mold with a resin and curing the resin to form the wind turbine blade or a part thereof. Infusion can be done using vacuum, in particular using a vacuum pump. Curing can be done by applying pressure and/or heat. The heat may be supplied by a heating system provided on the outer surface of the mold.

When referring to a "mold", this may mean a complete (closed) mold or an open mold, in particular a mold shell.

According to an embodiment, the temperature of the foil or tape during step a) is controlled to exceed 60 degrees Celsius.

Preferably, the temperature is controlled to range from 65-120 ± 5 degrees Celsius. The control may be an open or closed-loop control. In this way, it is ensured that the adhesive material is, at all times, soft enough to remove the foil or tape exerting the pulling force according to step b).

According to a further embodiment, the temperature is controlled using a temperature sensor sensing the temperature of the foil or tape.

This allows for closed-loop control of the temperature of the foil or heat in the locally heated area such as to provide an adequately soft adhesive material for removal of the foil or tape. The temperature sensor may be an infrared sensor.

According to a further embodiment, heat is supplied in step a) using a heat source arranged on the inside of a mold.

Thus, the heat source may be arranged and adjusted easily by an operator inside the mold.

According to a further embodiment, the heat source is moved inside of the mold during, before and/or after step a).

For example, the heat source may be moved by way of wheels inside the mold. In one embodiment, the heat source is attached to the manipulator of a robot which moves the heat source along the inside of the mold. By having a movable heat source, it is easy to apply the heat locally in the desired area.

According to a further embodiment, a distance between the heat source and the foil or tape is constant during step a).

This ensures a constant heat profile along the mold. Also, mistakes by which too much heat is locally applied, for example by placing the heat source too close to the foil or tape, can be avoided. For example, the (constant) distance may lie within a range between 1 cm and 1 m, preferably between 10 cm and 30 cm. In particular, the distance remains constant while the heat source is moving inside the mold. In another embodiment, the distance may be adjusted or adjustable (via corresponding means) to a desired value before, during or after step a).

According to an embodiment, the heat source is an irradiation source, in particular an infrared light source.

An irradiation source is particularly useful when trying, as presently the case, to heat up a layer (presently the adhesive material) which is not directly on the surface of the foil, but on the back side of the non-stick material. Radiation passes easily through the non-stick material to heat the adhesive material.

According to a further material, the heat source is part of a hand-held and/or hand-operated tool.

"Hand-held" refers to a tool that is fully supported by the operator's hands, except for possibly a power supply cable.
"hand-operated" herein refers to a tool that is partially held, supported or steered by a human operator.

According to a further embodiment, a surface area of the foil or tape heated in step a) is smaller than 1 m² when a position of the heat source is constant.

In this way, another human operator, for example the person performing step b), can stand close to the operator performing the local heating according to step a). The heated area may also be smaller than 1 m², for example smaller than 0.5 m² or, in particular, in the case of a hand-held tool, smaller than .1 m².

According to a second aspect, there is provided an apparatus for use in the removal of a foil or tape from an inner surface of a mold for casting a wind turbine blade or a part thereof, the foil or tape comprising a non-stick material on the inside which is configured not to react with resin during casting, and an adhesive material on the outside to stick to the inner surface of the mold, the apparatus being configured for locally heating the foil or tape to soften the adhesive material.

According to an embodiment, the apparatus comprises control circuitry to control the temperature of a foil or tape to exceed 60 degrees Celsius.

The control circuitry may haven an open or closed-loop control design.

According to a further embodiment, the apparatus comprises a heat source which is movable inside the mold.

According to a further embodiment, the apparatus comprises a frame for keeping the distance between the heat source and the foil or tape constant.

According to a further embodiment, the apparatus comprises a reflector for reflecting heat onto the foil or tape.

The reflector is, for example, made of a thin-walled metal, in particular stainless steel or aluminum (in particular polished aluminum). The reflector may have a curved shape which is concave with respect to the mold surface. The reflector may also comprise an insulation material. In particular, the insulation material guards against temperature losses from the reflector and/or the heated area. Thereby, also less heat is seen by the operator operating the heat source. The insulation material may be configured so as to protect against the risk of scalding of the operator, a second operator or bystanders.

According to a further embodiment, the irradiation source is configured as a heat source mounted in front of the reflector so as to face the foil or tape.

For example, the irradiation source may be attached to the reflector, in particular to a concave side thereof.

According to a further embodiment, the apparatus comprises at least two wheels carrying the frame.

In one example, even one wheel may be sufficient. In other examples, three or four wheels may be preferable. In particular, two wheels may be arranged as a pair. The wheels may also be arranged in two twinsets (pairs). For example, the wheels and/or frame may be arranged so as to pivot the heat source and/or reflector around an axis parallel to the axis of rotation of the one or more wheels when the wheels move along a curved surface. The one or more wheels may be made of a soft rubber material. This ensures that the mold surface and/or foil or tape is not scratched or damaged by the wheels.

According to a further embodiment, a pole is mounted to the frame or reflector for steering the operators along the inside of the mold.

The pole may be adjustable in length. The pole may be connected pivotally to the frame or reflector to allow for a relative rotation on a curved surface of the mold. Thereby, the operator can steer the apparatus more easily. The pivot motion may be around a first and/or a second axis. The first axis may be arranged parallel to an axis of rotation of the one or more wheels. The second axis may be arranged perpendicularly to the first axis and perpendicularly to the longitudinal axis of the pole.

According to a further embodiment, the apparatus is configured as a hand-held and/or hand-operated tool.

Embodiments and features described with reference to the first aspect apply, mutatis mutandis, to the second aspect, and vice versa.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
Fig. 1 shows, in a perspective view, a wind turbine according to an embodiment;
Fig. 2 shows, in a cross-section view, a lower mold shell to which a foil is applied by two operators;
Fig. 3 shows a section III-III from Fig. 2 when the foil has been placed on the mold surface and a fiber lay-up forming the to be manufactured part has been arranged inside the mold;
Fig. 4 shows an operator standing in the mold shell of Fig. 2 and operating an apparatus according to an embodiment;
Fig. 5 shows a respective enlarged view of the apparatus shown in Fig. 4;
Fig. 6 shows a cross-section VI-VI from Fig. 5; and
Fig. 7 shows a flow diagram of a method according to an embodiment.

In the Figures, like reference numerals designate like or functionally equivalent elements, unless otherwise indicated.

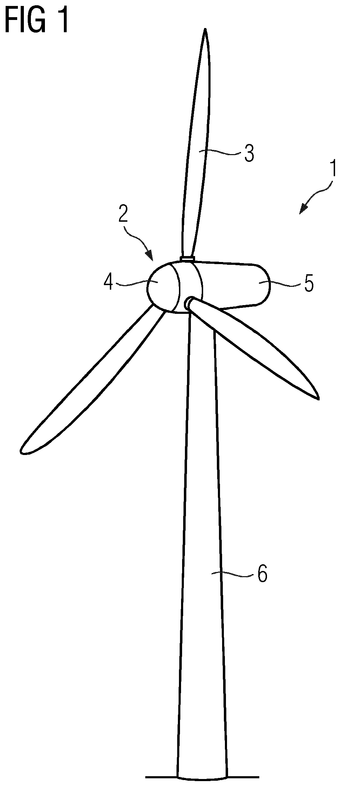

Fig. 1 shows a wind turbine 1 according to an embodiment. The wind turbine 1 comprises a rotor 2 having two or more blades 3 connected to a hub 4. The hub 4 is connected to a generator (not shown) arranged inside a nacelle 5. During operation of the wind turbine 1, the blades 3 are driven by wind to rotate and the wind's kinetic energy is converted into electrical energy by the generator in the nacelle 5. The nacelle 5 is arranged at the upper end of a tower 6 of the wind turbine 1. The tower may be connected to a monopile or concrete foundation in the ground or sea bed.

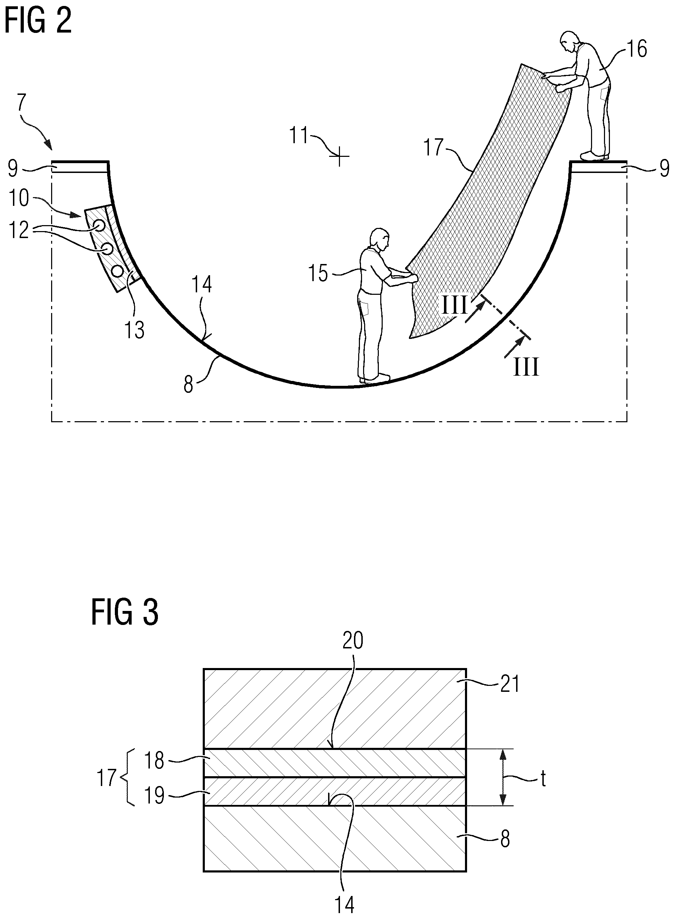

Fig. 2 shows, in a cross-section, parts of a lower mold 7 used in the manufacture of a blade 3 or part thereof. In particular, it is a lower blade shell (not shown) which is manufactured using the mold 7.

Only some relevant parts of a lower mold 7 are shown in Fig. 2, while others, such as a supporting structure, are not shown. The lower mold comprises a mold shell 8 which is made of, for example, a fiber composite material. The fiber composite material may comprise, for example, glass fibers, carbon fibers and/or aramid fibers in a cured resin matrix. The resin may comprise an epoxy or other polymer. The lower mold shell 8 has a curved, for example approximately semicircular, shape with flanges 9 extending horizontally.

A heating system 10, only a part of which is shown in Fig. 2, is arranged on the outside of the mold shell 8. "Outside" and "inside" presently refer to a mold center 11 unless indicated otherwise. The heating system 10 is configured to start a curing process of the blade 3 or part thereof manufactured in the mold as explained in more detail later. The heating system 10 may comprise heating pipes 12 extending, for example, in parallel to the mold 7. The heating pipes 10 are, e.g., embedded in an insulating material (such as polyurethane foam), and heat transfer to the mold shell 8 is achieved through a heat transfer layer 13. The heat transfer layer 13 may comprise metal particles embedded in a resin matrix.

An inside surface 14 of the mold shell 8 defines the outer shape of the blade 3 or part thereof. It is a delicate surface which must not be scratched or otherwise damaged.

Fig. 2 further shows an operator 15 standing inside the mold shell 8. Another operator 16 is standing adjacent to one of the two flanges 9 at the top of the lower mold 7. Together, the operators 15, 16 handle a foil 17 which is also referred to as an PTFE-foil. They place the foil 17 on top of the inside surface 14.

The foil 17 may be comprised of, as shown in Fig. 3 in cross-section, a non-stick material 18 forming a first layer of the foil 17 and an adhesive material 19 forming a second layer of the foil 17. The layers 18, 19 are arranged on top of another. For example, the non-stick material 18 is a PTFE layer which may be reinforced with glass fiber material (not shown). The adhesive layer may comprise silicone. The thickness t of the foil 17 may be smaller than 1 mm, for example.

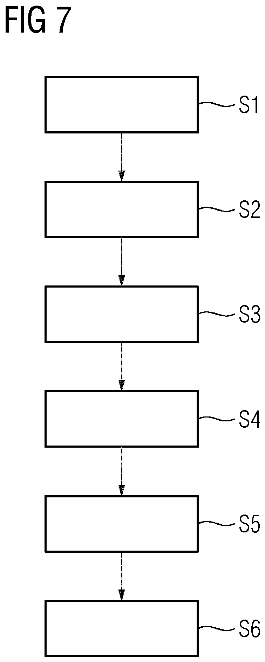

The foil 17 is placed by the operators 15, 16 on top of the inside surface 14 of the mold shell 8 such that the adhesive layer 19 comes into contact with the surface 14 and bonds therewith. A tool (not shown) may be applied to the non-stick layer 18 after placement of the foil 17 in order to remove any bubbles. Thus, the foil 17 provides a smooth inner surface 20. The step of placing the foil 17 corresponds to method step S1 in Fig. 7 showing, in a flow diagram, a method according to an embodiment.

In step S2, a fiber lay-up 21 is arranged on top of the surface 20 formed by the foil 17.

The fiber lay-up 21 is covered by a vacuum foil (not shown) and a vacuum is applied. This results in the fiber layer being infused with a resin, for example an epoxy resin. Thereafter, the mold may be closed using an upper mold shell (not shown) with corresponding flanges sealing against the flanges 9 shown in Fig. 2. In a further step, hot water is passed through the pipes 12 to apply heat to the mold 7 and thereby cure the fiber lay-up 21 infused with the resin, see step S3 in Fig. 7.

During the curing of the resin in the fiber lay-up, even though said resin is in contact with the non-stick material 18, the non-stick material 18 does not chemically react with the resin or with the fibers in the fiber lay-up 21. Practically no bonds are being formed. Thus, in step S4, the socalled green blade 3 or part thereof is removed from the mold 7 (also called "demolding") without any part of the blade 3 or part thereof sticking to the foil 17.

After demolding, the foil 17 is checked for any signs of wear. When a significant amount of wear is determined, the foil 17 needs to be replaced. This may concern just one foil, multiple foils or all foils in the mold 7.

Next, it is waited until the mold 7 has sufficiently cooled down. In particular, it is waited until the surface temperature on the foil 17 is below 60 degrees Celsius, preferably below 30 degrees Celsius. At such temperatures, the adhesive material 19 is hard, and it is practically impossible or very hard to remove the foil 17 by human force, i.e., by pulling on one end of the foil 17. But even if sufficient force can be exerted, there is a high risk that the adhesive material 19, being torn off the inner surface 14, tears out filler material, paint or even fibers out of said surface 14.

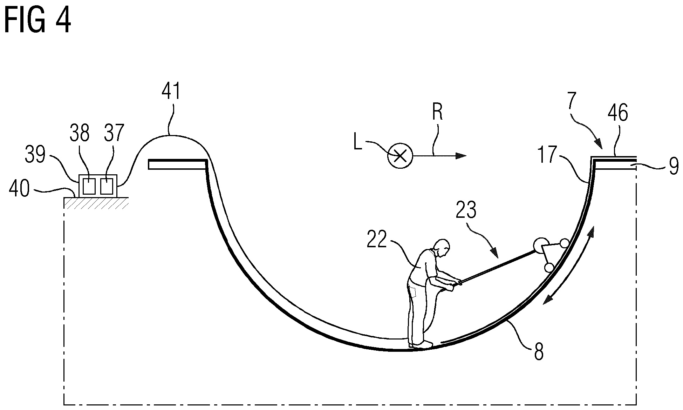

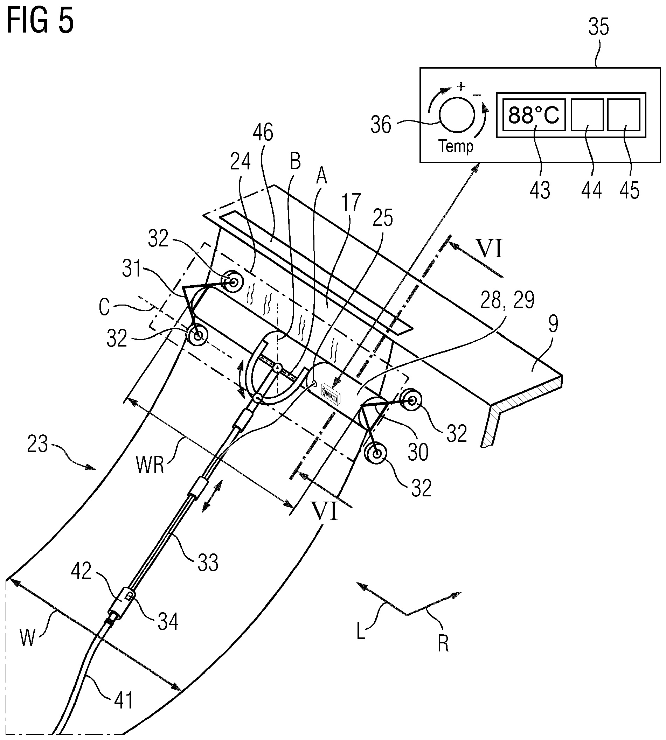

Therefore, as shown in step S5 and Fig. 4, which shows a cross-section of the mold 7, an operator 22 uses an apparatus 23 to locally heat the foil 17 from the inside. The apparatus 23 is shown in a perspective view in more detail in Fig. 5. The apparatus 23 is configured to maintain the temperature of the foil 17 locally at a range between 65 and 120°±5° as will be explained in more detail further on. For example, the area in which the apparatus 23 is configured to raise and maintain the temperature of the foil 17 above 65°±5° (or any other value in the above-mentioned range) may be limited to 1 m² or less. This area is designed with reference numeral 24 in Fig. 5. The apparatus 23 may use open loop or closed-loop control to maintain the temperature at the desired level. Closed-loop control is preferred, and therefore the apparatus 23 may comprise a temperature sensor 25, for example an infrared sensor, which is configured to sense the temperature of the foil 17 in the area 24.

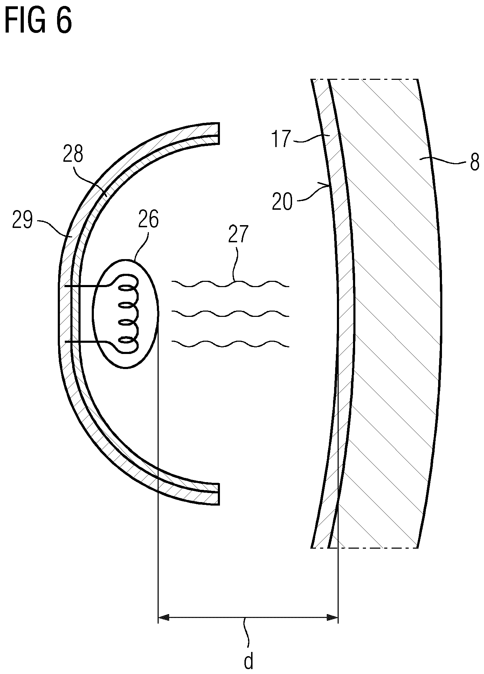

The apparatus 23 further includes a heat source 26 which is shown in Fig. 6, illustrating a cross-section VI-VI of Fig. 5. The heat source 26 may be configured as an infrared light source irradiating the foil 17. The corresponding radiation 27 (heat) passes through a non-stick material 18 and heats up, in particular, the adhesive material 19 (see Fig. 3).

To ensure that the heat is applied only locally and that the operator 22 sees as little as possible of that heat, there is provided the metal reflector 28. The metal reflector 28 may be made of polished aluminum sheet material formed in a concave shape with respect to the mold shell 8 as can be seen in Fig. 6. The heat source 26 is mounted on the inside of the reflector 28. Here, the "inside" refers to a side facing towards the mold shell 8 when the apparatus 23 is used to heat the foil 17. On the outer surface, i.e., facing away from the mold shell 8, the reflector 28 may be provided with an insulation 29. The insulation 29 also has the function of preventing heat transfer to the operator 22, and also to prevent scalding of other operators or bystanders. In particular, the insulation 29 allows another operator (not shown) to stand very close by and to exert a pulling force on the foil 17 in areas where the adhesive material 19 has been softened through the application of heat applied by the apparatus 23.

The half-cylinder shape of the reflector 28 including the insulation 29 is also shown in Fig. 5. Also, Fig. 5 illustrates a frame having a pair of two-arm structures 30, 31 connected fixedly to the reflector 28 on opposite sides thereof. The two-arm structures 30, 31 each connect a set of two wheels 32 to the reflector 28. The wheels 32 may be made of soft rubber. The apparatus 23 moves, by way of the wheels 32 when steered by the operator 22, over the foil 17 as required to sufficiently soften the adhesive material 19.

A distance d (Fig. 6) of the heat source 26 with respect to the inside surface 20 of the foil 17 is kept constant by way of the two-arm structure 30, 31 and the wheels 32 supporting the reflector 28 and being fixedly connected thereto. d has for example a value of 1 to 20 cm.

For improved steering, the apparatus 23 may further comprise a pole 33 which can be adjusted in the lengthwise direction, as indicated by the double arrow in Fig. 5. For example, the pole 33 can be made telescopic. As shown in Fig. 4, the pole 33 is held by the operator 22 to steer the apparatus 23 across the foil 17.

The pole 33 may be connected pivotally to the reflector 28. For example, two pivot axes A, B are defined. The pivot axis A is oriented parallel to an axis C around which at least one of the wheels 32 rotates. When the pole 33 pivots around axis A relative to the reflector 28, this makes it more easy for the operator 22 to move the apparatus 23 up or down the curved surface of the mold shell 8 as shown in Figs. 4 and 5. Furthermore, the pivotal motion around the axis B of the pole 33 relative to the reflector 28 allows the operator 22 to stand more sideways with respect to the reflector 28 and still move it in the crosswise direction of the mold shell 8. The crosswise direction is indicated with reference numeral R in Figs. 4 and 5. The crosswise direction R is at right angles to the lengthwise direction L of the mold 7.

The apparatus 23 may comprise an on/off switch 34 to activate or deactivate the heat source 26 for it to provide heat or for it to stop providing heat. Also, the apparatus 23 may comprise a user interface 35 which is shown in an enlarged view on the top right of Fig. 5. The interface 35 comprises a dial 36 (temperature selector) to set the temperature of the foil 17 in the area 24.

For example, the apparatus 23 comprises a closed-loop control circuitry 37 (Fig. 4). The circuitry 37 receives a temperature value measured by the temperature sensor 25 as a feedback and controls the heat source 26 in accordance with the temperature set by the temperature dial 36. The circuitry 37 and/or a transformer 38 transforming the current used by the heat source 26 may be arranged in a cabinet 39 on a platform 40 arranged adjacent to the mold 7. The transformer 38 and/or the circuitry 37 may be connected to the heat source 26 and/or the temperature sensor 25 via a (flexible) cable 41. The cable 41 reaches from the cabinet 39 on the platform 40 to the distal end 42 of the pole 33 where it is attached, and from there connected to the heat source 26 and/or the temperature sensor 25. The on/off switch 34 and the interface 35 may be connected in between.

Coming back to the interface 35, said interface 35 comprises, preferably, in addition to the temperature dial 36 a display 43 showing the current temperature of the foil 17 as measured by the temperature sensor 25. Also, the interface 35 may comprise two lights 44, 45 shining a red or green light depending on whether the heat source 26 is activated or not.

The width W of a single foil 16 may be, for example, between .5 and 1.5 m, for example 1 m. Accordingly, the width WR of the reflector 28 may also range, for example, between .3 m and 1.2 m. In particular, the width WR is smaller than the width W of the foil 17.

As can be seen in Fig. 4, the pole 33 is held by two hands of the operator 22. The apparatus 23 is further supported by the wheels 32. The apparatus 23 is thus referred to as a hand-operated tool.

However, for other applications, in particular where a tape 46 shown in Figs. 4 and 5 is to be heated, an apparatus may be used that is hand-held, thus being exclusively supported by the operator 22, i.e., without wheels etc. Such an apparatus may have a much smaller width WR, for example between 5 and 15 cm.

Once the adhesive material 19 has been properly heated to, for example, 80 degrees Celsius, another operator (not shown) pulls off the foil 17 in the area 24 and continues to pull off the entire foil 17 (corresponding to step S6 of Fig. 7).

Although the present invention has been described in accordance with preferred embodiments, it is obvious for the person skilled in the art that modifications are possible in all embodiments.

## Claims

1. A method for removing a foil (17) or tape (46) from an inner surface (14) of a mold (7) for casting a wind turbine blade (3) or a part thereof, the foil (17) or tape (46) comprising a non-stick material (18) on the inside which is configured not to react with resin during casting (S1, S2, S3), and an adhesive material (19) on the outside to stick to the inner surface (14) of the mold (7), the method comprising:
a) locally heating (S5) the foil (17) or tape (46) to soften the adhesive material (19); and
b) exerting (S6) a pulling force on the foil (17) or tape (46) to remove the foil (17) or tape (46) from the inner surface (14) of the mold (7).

2. The method according to claim 1, wherein the temperature of the foil (17) or tape (46) during step a) is controlled to exceed 60 degrees Celsius.

3. The method according to claim 2, wherein the temperature is controlled using a temperature sensor (25) sensing the temperature of the foil (17) or tape (46).

4. The method according to one of claims 1 - 3, wherein heat (27) is applied in step a) using a heat source (26) arranged on the inside of the mold (7).

5. The method according to claim 4, wherein the heat source (26) is moved inside of the mold (7) during, before and/or after step a).

6. The method according to claim 4 or 5, wherein a distance (d) between the heat source (26) and the foil (17) or tape (46) is constant during step a).

7. The method according to one of claims 4 - 6, wherein the heat source (26) is a irradiation source, in particular an infrared light source.

8. The method according to one of claims 4 - 7, wherein the heat source (26) is part of a hand-held and/or hand-operated tool.

9. The method according to one of claims 4 - 8, wherein a surface area (24) of the foil (17) or tape (46) heated in step a) is smaller than 1 m² when a position of the heat source (26) is constant.

10. An apparatus (23) for use in the removal of a foil (17) or tape (46) from an inner surface (14) of a mold (7) for casting a wind turbine blade (3) or a part thereof, the foil (17) or tape (46) comprising a non-stick material (18) on the inside which is configured not to react with resin during casting (S1, S2, S3), and an adhesive material (19) on the outside to stick to the inner surface (14) of the mold (7), the apparatus (23) being configured for locally heating the foil (17) or tape (46) to soften the adhesive material (19).

11. The apparatus according to claim 10, comprising control circuitry (37) to control the temperature of the foil (17) or tape (46) to exceed 60 degrees Celsius.

12. The apparatus according to claim 10 or 11, comprising a heat source (26) which is movable inside the mold (7).

13. The apparatus according to claim 12, comprising a frame (30, 31) for keeping a distance (d) between the heat source (26) and the foil (17) or tape (46) constant.

14. The apparatus according to claim 12 or 13, comprising:
a reflector (28) for reflecting heat (27) onto the foil (17) or tape (46), the reflector (28) being mounted on the frame (30, 31),
an irradiation source (26) as a heat source mounted in front of the reflector (28) so as to face the foil (17) or tape (46),
at least two wheels (32) carrying the frame (30, 31), and/or
a pole (33) mounted to the frame (30, 31) or reflector (28) for steering the apparatus (23) along the inside of the mold (7).

15. The apparatus according to one of claims 10 - 14, which is configured as a hand-held and/or hand-operated tool.
